# EUROPEAN PATENT APPLICATION

(11) **EP 1 793 129 A1**
(43) Date of publication of application: **06.06.2007**
(21) Application number: 06124778.9
(22) Date of filing: 24.11.2006
(51) Int. Cl.: F16B 12/20

(54) **Joint for removably connecting two structural furniture members abutting orthogonally against each other**

(30) Priority: 02.12.2005 IT PN20050035 U
(71) Applicant: Ferramenta Livenza S.r.l., 33070 Maron di Brugnera, Pordenone (IT)
(72) Inventor: Ferro, Renato, 33170, Pordenone (IT)
(74) Representative: Giugni, Valter

(57) **Abstract**

Joint for removably connecting two structural furniture members abutting orthogonally against each other, comprising an accommodation case (2) that is capable of being associated to a first structural member (3) and adapted to engage a fastening member (4) associable to a second structural member (5), and further comprising an actuator member (6) provided in the accommodation case (2) and adapted to cooperate with said fastening member (4) so as to secure said structural members (3, 5) firmly to each other. The fastening member (4) comprises a toothed head (7) provided integrally in a single-piece construction with a screw stem (12), said toothed head (7) being rotatably retained in said accommodation case (2) and said screw stem (12) protruding from said accommodation case (2), wherein the actuator member (6) comprises a plurality of teeth (22) to drive said head (7) so as to screw said screw stem (12) into the second structural member (5).

## Description

The present invention relates to a joint for removably connecting two structural furniture members abutting orthogonally against each other.

There are structural furniture members, such as for instance the bottom and the ceiling of cabinets, that are usually applied on to the walls of the related piece of furniture with the aid of joints that are attached within the core portion, i.e. core portion of said structural members. These joints comprise a receiving body adapted to accommodate the head of a pin, said body being secured to the wall of the piece of furniture.

Movable members, which are adapted to be actuated by means of a tool, are provided within said accommodation case of the joint so as to engage the head of the pin and enable the latter to be drawn in view of bringing and keeping the structural members to be joined tightly close to each other.

These movable members usually include an eccentric, or cam member, which is adapted to rotate inside the accommodation case of the joint, and by means of which the pin is engaged and drawn tight.

A drawback that is commonly encountered with prior-art joints of the above-noted kind derives from the fact that the kinematics enabling the structural furniture members to be joined tightly together is particularly complicated due to the presence of the above-cited eccentric and the related parts cooperating with such eccentric.

Another typical drawback is due to the fact that the eccentric does not only impose a tensile stress upon said pin, but also a rather significant shearing stress that induces a clear bending stress component in the same pin, with the result of a rather poor effectiveness in the way in which the structural furniture members are tightened and held together, further to both the pin and the entire kinematics of the joint being so stressed to an undesired extent in a way that may eventually lead to the joint suffering some serious damage in the long run and the pin getting deformed, or the pin itself loosening from the wall of the furniture piece.

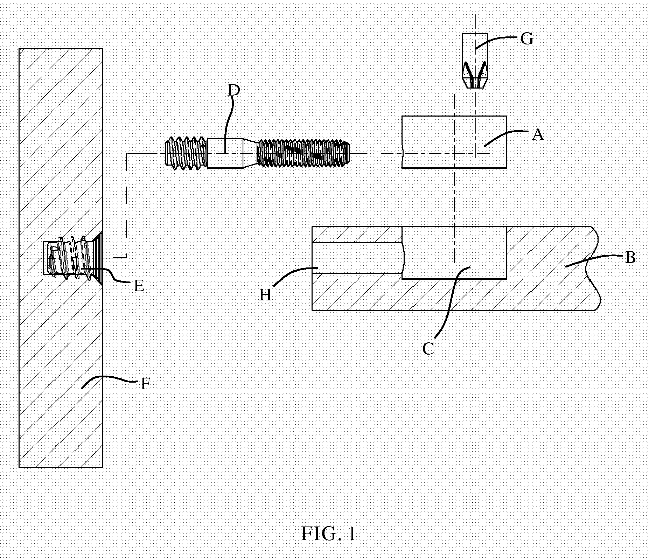

Such drawbacks are overcome with a joint of the kind shown in Figure 1, which is comprised of a receiving or accommodation case A adapted to be associated to a shelf or similar plate B at an appropriate seat or receptacle C provided into the core portion of said shelf B, and a threaded pin D adapted to be associated by screwing to a bush E inserted in the side wall F of a furniture piece.

The threaded pin D is adapted to be coupled by screwing to a threaded sleeve provided inside the accommodation case A and accessible from outside through an appropriate bore.

Inside the accommodation case A there are provided gear means engaging a toothed portion of said sleeve to cause the latter to rotate so as to enable the threaded pin D to be tightened by screwing thereinto and, as a result, the shelf to be joined to the side wall of the piece of furniture. Such gear means are actuatable - with the help of a tool G - from the upper side of the shelf B, through an aperture provided in said accommodation case.

The joint of the above-described kind has however a drawback in that it makes it particularly difficult for a shelf B and a side wall F of the furniture piece to be connected to each other. In fact, the related assembly procedure calls for the threaded pin D to be in the first place screwed into the bush E in the side wall F of the furniture piece and the shelf B to be subsequently brought near the side wall F, so as to be able to screw the threaded pin D into the accommodation case A.

The threaded pin D is inserted in a longitudinal through-bore H, which is provided to this purpose in the centre portion of the core portion of the shelf B, and which is in communication with the receptacle C, in which said accommodation case A is fixedly seated. The threaded pin thus engages the threaded sleeve of the accommodation case 10 by passing through the afore-cited appropriate hole in the accommodation case A, which must therefore be positioned along the same axis as said longitudinal through-bore.

Once the threaded pin D has in this way engaged the threaded sleeve, the gear means are operated - with the aid of the tool G - so as to cause said sleeve to rotate and enable the pin D to screw into the same sleeve in the body A.

The entire procedure needed to assemble the shelf to the side wall turns therefore out as being rather complicated and laborious.

Since quite long a time is required for such a connection procedure to be completed, the same procedure turns also out as being rather unpractical to be carried out even from an economic point of view.

A further drawback connected with the above-described kind of joint derives from the fact that the need arises for not only the seat intended to receive the accommodation case A to be provided in the core portion of the shelf B, but also the longitudinal bore H extending orthogonally to the same seat, with the result of an increase in both manufacturing costs and time.

Another disadvantage of the above-described joint is due to the fact that it involves a construction that is comprised of a number of discrete members and parts, i.e. the accommodation case A, the threaded pin D, the threaded sleeve and the gear means provided inside the accommodation case A, which add further complication to the construction of such joint, with the result of making it rather awkward to manufacture.

A further disadvantage yet of the above-described joint is due to the fact that the gear means can solely be accessed by the tool from a single side of the shelf B.

It is therefore an object of the present invention to provide a joint for removably connecting two structural members of a furniture piece abutting orthogonally against each other, which is effective in doing away with the drawbacks and disadvantages of prior-art joints of the same kind.

Within this general object, it is a purpose of the present invention is to provide a joint of the above-indicated kind, which is simple from both a functional and a structural point of view.

Another purpose yet of the present invention is to provide a joint of the above-noted kind, which allows for an improved connection between a shelf and a side wall of the furniture piece, while ensuring a highest possible extent of safety and reliability.

A further purpose of the present invention is to provide a joint of the above-indicated kind, which is simple in construction and capable of being manufactured at fully competitive costs.

According to the present invention, these aims, along with further ones that will become apparent from the following disclosure, are reached in a joint incorporating the features as defined and recited in the claims 1 to 9 appended hereto.

Features and advantages of the present invention will anyway be more readily understood from the description that is given below by way of nonlimiting example with reference to the accompanying drawings, in which:
- Figure 1 is a perspective exploded view of a joint according to the prior art;

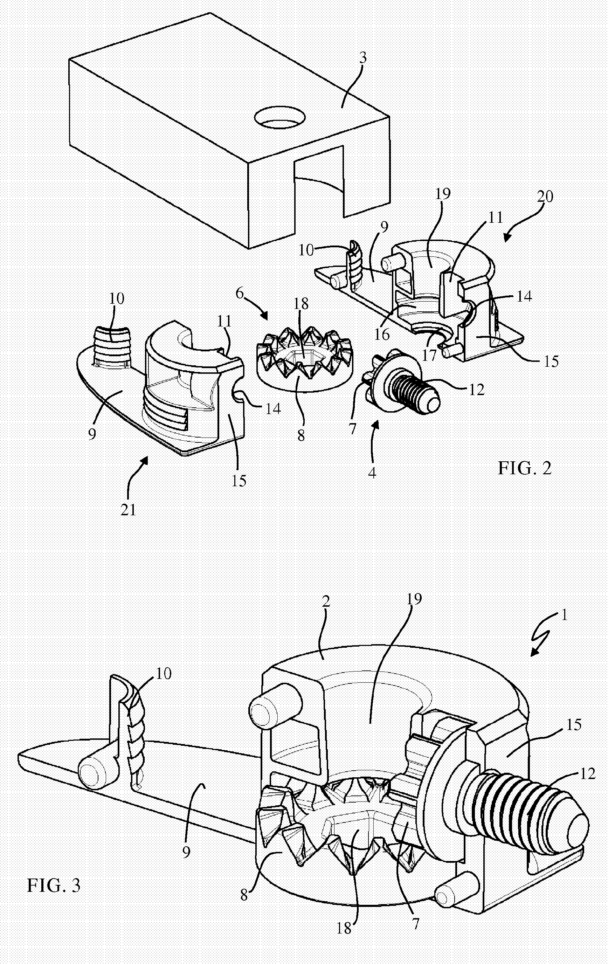

- Figure 2 is a perspective exploded view of a joint according to the present invention;
- Figure 3 is a perspective view of the joint according to the present invention, as viewed with a half-shell thereof removed;
- Figure 4 is a side cross-sectional view of the joint according to the present invention;
- Figure 5 is a bottom view of the joint shown in Figure 3;
- Figure 6 is a perspective exploded view of a joint according to a further embodiment of the present invention;
- Figure 7 is a perspective view of the joint shown in Figure 6, as viewed with a half-shell thereof removed;
- Figure 8 is a side cross-sectional view of the joint shown in Figure 6;
- Figure 9 is a bottom view of the joint shown in Figure 6, as viewed in the state in which it is secured to the structural members of the furniture piece.

With reference to the above-cited Figures, the joint according to the present invention, which is indicated generally at 1 there, comprises an accommodation case 2 that is capable of being associated to a first structural member 3 and adapted to engage a fastening means 4 associable to a second structural member 5; it further comprises an actuator member 6 provided in the accommodation case 2 and adapted to cooperate with said fastening member 4 so as to secure said structural members firmly to each other.

The fastening member 4 comprises a toothed head 7 and the actuator member 6 comprises a plurality of teeth 22, said toothed head 7 and the actuator member 6 being so arranged in the accommodation case 2 as to form a gear drive, wherein said actuator member 6 is adapted to drive said head 7 so as to screw the fastening member 4 into the second structural member 5.

The accommodation case 2 further defines a planar face 9, from which there extends orthogonally a pin 10 provided in a side-by-side arrangement relative to the same accommodation case. The pin 10 and the accommodation case 2 are adapted to be inserted in respective receptacles recessed in the core portion of the first structural member 3, e.g. the bottom or ceiling of a furniture piece, in such a manner as to have the accommodation case 2 lying flush at a head position on the side of the first structural member 3 intended for abutment against the second structural member 5 where the two members are due to be connected to each other.

The planar face 9 is adapted to contact a lower surface of the first structural member 3 between the receptacles recessing into the core portion of the first structural member 3.

The accommodation case 2 defines a first annular receptacle 11 adapted to rotatably accommodate the toothed head 7 of the fastening member 4.

The toothed head 7 is adapted to rotate inside said first annular receptacle 11 under the action of the actuator member 6, so as to bring about the desired connection of the two structural members 3, 5 with each other, as this shall be described further hereinbelow.

The fastening member 4 comprises a screw stem 12 formed as an integral piece with the toothed head 7 and adapted to engage an appropriate screw-in or tightening receptacle 13 provided in the second structural member 5.

Such screw-in receptacle 13 advantageously comprises a threaded bush fitted in the core portion of the second structural member 5.

The screw stem 12 extends to protrude outside the accommodation case 2 through a front aperture 14 provided in the accommodation case 2 in correspondence to and in communication with the first annular receptacle 11. The front aperture 14 is provided on an abutment portion 15 of the accommodation case 2, which is adapted to face and come into abutment against the second structural member 5 when said structural members 3, 5 are joined together.

The accommodation case 2 further defines a second annular receptacle 16 adapted to rotatably accommodate the actuator member 6 for the latter to be able to rotatably drive the toothed head 7.

In particular, the actuator member 6 and the toothed head 7 are so arranged relative to each other so as to form a gear pair, or gear drive, in which the actuator member 6 meshes with the toothed head 7 in order to transfer the rotary motion of the actuator member 6 to the screw stem 12 of the fastening member 4. In practice, the actuator member 6 performs as the motive member, or driver, of said gear pair, whereas the fastening member 4, through its toothed head 7, performs as the follower, or pinion, of said gear pair.

The actuator member 6 is accessible from the outside of the accommodation case 2, so as to be able to be rotated with the aid of a proper tool. To this purpose, the accommodation case 2 is in fact provided with a hole 17 provided in the planar face 9 in correspondence to the second annular receptacle 16, through which a tool is able to be inserted to engage a correspondingly shaped centre portion 18 of the actuator member 6.

In a highly preferred embodiment of the present invention, the accommodation case 2 is comprised of a first half-shell 20 and a second half-shell 21, which are substantially complementary and associable to each other so as to define the first annular receptacle 11 and the second annular receptacle 16, further to the other elements of the accommodation case 2, i.e. the planar face 9, the pin 10, the front aperture 14, the abutment portion 15 and the hole 17.

Dowel-pins, or centering pegs, and corresponding receptacles are provided on the two half-shells 20, 21 to enable them to be correctly associated to each other; in a preferred embodiment thereof, the two half-shells are associated to each other by riveting.

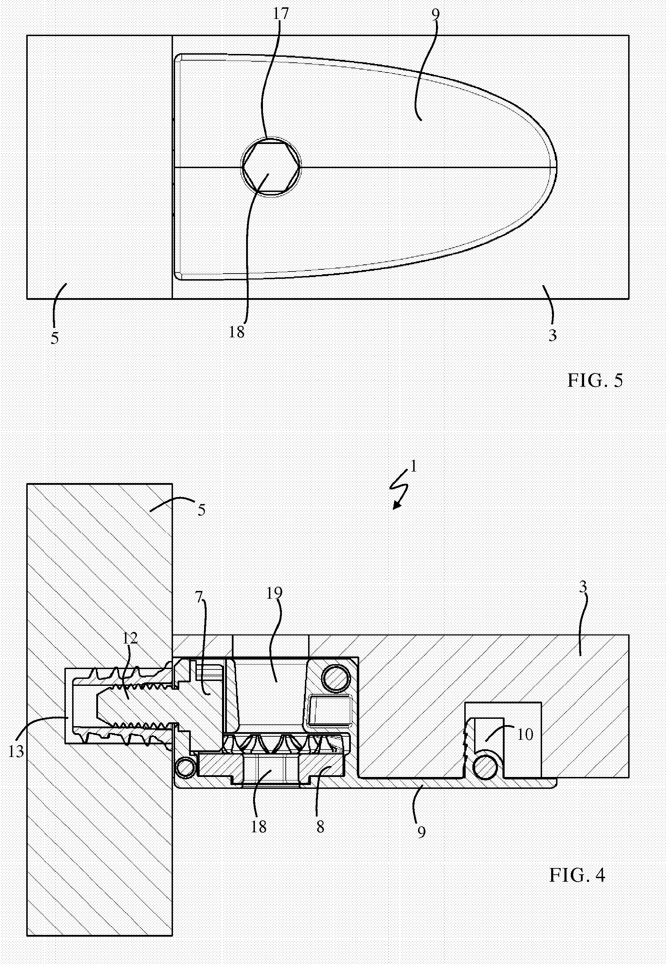

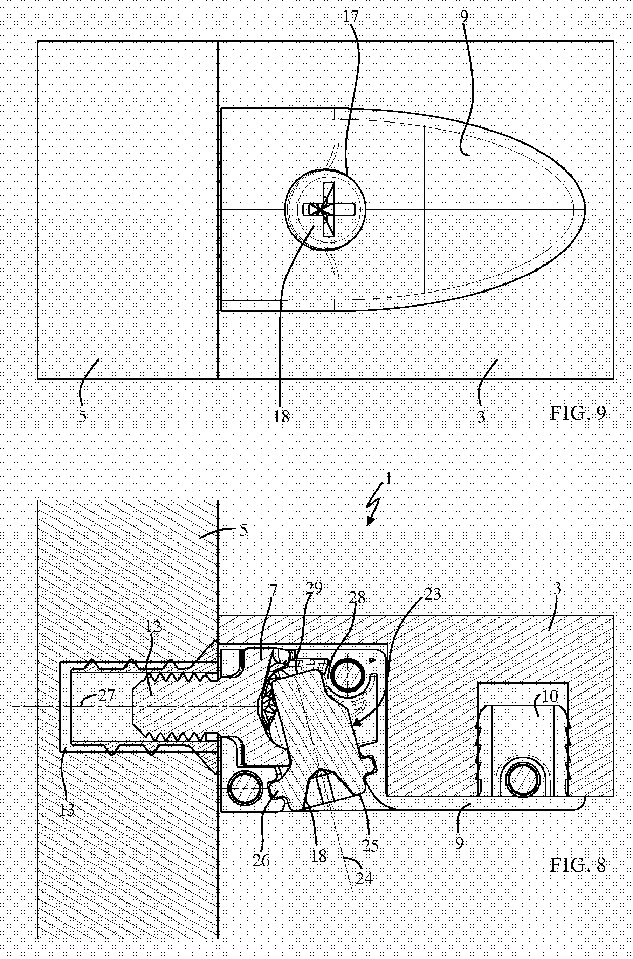

The joint according to the present invention may be associated to the first structural member 3 in the manner shown in Figure 4 and Figure 8, i.e. with the planar face 9 thereof in contact with the lower surface of the first structural member 3 between the receptacles provided into the core portion of the first structural member 3. Alternatively, the possibility is also given for the joint to be applied to the first structural member 3 from above, i.e. with the planar face 9 thereof in contact with the top surface of the first structural member 3.

The way in which the inventive joint works is as follows:

The screw stem 12 is brought in correspondence to the bush of the screw-in or tightening receptacle 13 and, with the aid of a tool engaging the centre portion 18, the actuator member 6 is rotated.

Being so rotated, the actuator member 6 drives the toothed head 7, thereby causing the rotary motion to be transmitted to both the same head and the screw stem 12.

As a result, the screw stem 12 screws into the bush of the screw-in or tightening receptacle 13, thereby applying a traction load on to the accommodation case 2 and, therefore, the first structural member 3 to draw the latter towards the second structural member 5 until the two members are tightly joined to each other.

In an advantageous manner, such tractional action is solely performed by the fastening member 4; therefore, once the screw stem 12 is screwed into the bush, the actuator member is released and free of any stress whatsoever.

In a first preferred embodiment of the present invention, as illustrated in Figures 1 through to 5, the actuator member 6 is provided in the form of a crown gear 8 adapted to rotate within the annular receptacle 16.

The crown gear 8 and the toothed head 7 are preferably arranged on planes extending orthogonally relative to each other and, advantageously, the crown gear 8 lies on a horizontal plane when the two structural members 3, 5 are joined to each other.

The centre portion 18 is formed of an aperture having a hexagonally shaped cross-section, provided centrally in the crown gear 8 and adapted to be engaged by a corresponding Allen wrench or similar tool.

Advantageously, the accommodation case 2 is provided with a central cavity 19 - defined by the two half-shells 20, 21 when associated to each other - extending throughout the same accommodation case in a direction that is perpendicular to the plane in which the crown gear 8 is adapted to rotate.

Such central cavity 19 is adapted to extend into the receptacle of the first structural member 3, in which the accommodation case 2 is inserted, so as to enable a tool to gain access to the centre portion 18 of the crown gear 8 by passing through the whole thickness of the appropriately bored first structural member 3.

The central cavity 19 is further in communication with the hole 17, so that a tool is able to pass through the accommodation case 2 and the thickness, i.e. the core portion of the first structural member 3 to eventually reach and actuate further devices capable of being associated to the first structural member 3.

The crown gear 8 may be operated either from the bottom, i.e. from under the first structural member 3, via the through-bore 17, or from the top, i.e. from above the first structural member 3, via the central cavity 19. The crown gear 8, therefore, is easily and readily accessible under any condition of use of the related piece of furniture.

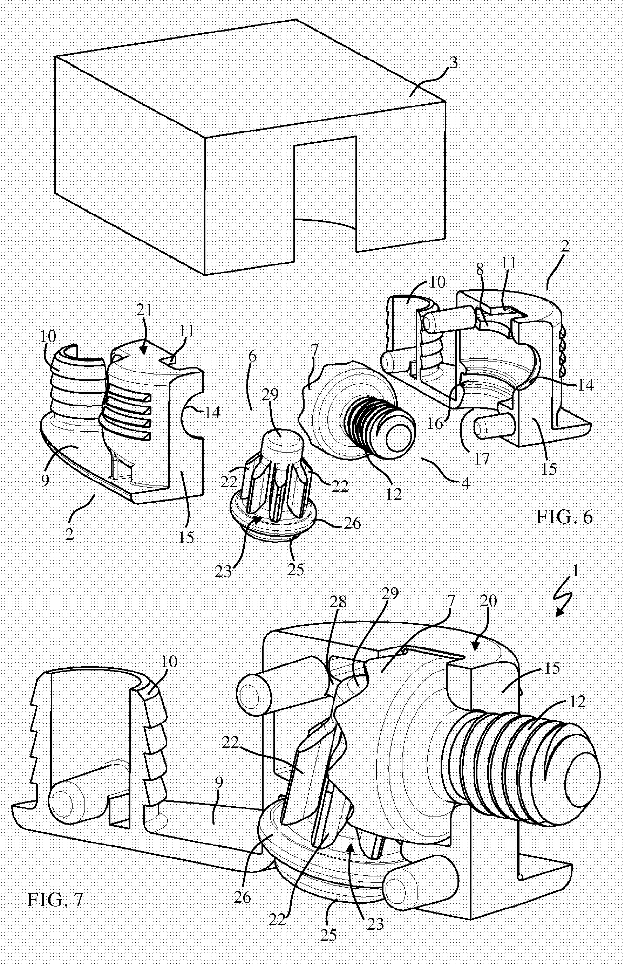

In a yet further embodiment of the present invention, which is illustrated in Figures 6 to 9, the actuator member 6 is provided in the form of a shaft 23, whose teeth 22 are protruding radially relative to the axis of rotation 24 of the same shaft. At a first end portion 25 thereof, such shaft 23 defines an annular edge 26 adapted to slide along the annular receptacle 16 to guide the rotation of the shaft 23 about the axis of rotation 24 thereof. In an advantageous manner, the axis of rotation 24 of the shaft 23 and the axis of rotation 27 of the toothed head 7 and, therefore, the fastening member 4, are not oriented orthogonally, i.e. they form an angle different from 90°, relative to each other. In particular, when the two structural members 3, 5 are connected to each other, the axis of rotation 27 of the toothed head 7 lies horizontally, whereas the axis of rotation 24 of the shaft 23 is inclined relative to the vertical so as to converge towards the toothed head 7. Such configuration enables the meshing effectiveness between the teeth 22 of the shaft 23 and the toothed head 7 and, as a result, the rotation effectiveness of the fastening member 4 to be maximized. In addition, such configuration facilitates, i.e. makes it particularly convenient for the shaft 23 to be operated to rotate, since the tool, e.g. the screwdriver or the Allen wrench, that engages the centre portion 18, is conveniently spaced away from the second structural member 5 being connected, so that the same tool can be handled in a more convenient, unhindered manner.

Advantageously, the centre portion 18, as provided at the first end portion 25 of the shaft 23, may for instance be given the shape of a star, so as to allow a screwdriver to engage it, or it may be provided with an aperture having a hexagonal cross-sectional shape, for it to be engaged by an appropriate Allen Wrench or similar tool.

The accommodation case 2 furthermore defines a guide member 28 adapted to hold and keep the shaft 23 in its inclined position towards the toothed head 7, so that the teeth 22 of the shaft 23 are continuously biased into coupling with the toothed head 7. This guide member 28, which has an annular conformation, engages a corresponding annular portion provided at a second end portion 29 of the shaft 23, wherein the sliding engagement between such guide member 28 and the second end portion 29 of the shaft 23 does by no means hinder or interfere with the rotation of the shaft 23.

Fully apparent from the above description is therefore the ability of the present invention to effectively reach the aims and advantages cited afore by providing a joint that is particularly simple in both its construction and operation and further enables the structural members of a piece of furniture to be firmly and tightly connected to each other in a very simple and quick manner.

The inventive joint does also away with the need for a longitudinal through-bore to be provided along the centre portion of the core, i.e. thickness of the shelf (first structural member 3), threreby simplifying manufacturing to an appreciable extent.

In addition, the joint according to the present invention is comprised of just a limited number of parts, i.e. the accommodation case, the fastening member and the crown gear.

A further advantage of the joint according to the present invention lies in the fact that the crown gear can be accessed by a tool for operation from both sides of the first structural member.

It shall be appreciated that the inventive joint, as described above, as well as the method for carrying out the same are subject to a number of modifications and may be embodied in a number of different manners without departing from the scope of the present invention as defined in the appended claims.

It shall finally be appreciated the materials used in connection with the present invention, as well as the sizing and the shapes of the various component parts, may each time be selected so as to more appropriately meet the particular requirements or suit the particular application.

## Claims

1. Joint for removably connecting two structural furniture members abutting orthogonally against each other, comprising:
- an accommodation case (2) that is capable of being associated to a first structural member (3) and adapted to engage a fastening member (4) associable to a second structural member (5),
- and an actuator member (6) provided in the accommodation case (2) and adapted to cooperate with said fastening member (4) so as to secure said structural members (3, 5) firmly to each other, **characterized in that** said fastening member (4) comprises a toothed head (7) provided integrally in a single-piece construction with a screw stem (12), said toothed head (7) being rotatably retained in said accommodation case (2) and said screw stem (12) protruding from said accommodation case (2), said actuator member (6) comprising a plurality of teeth (22) adapted to drive said head (7) so as to screw said screw stem (12) into the second structural member (5).

2. Joint according to claim 1, wherein said accommodation case (2) defines a first annular receptacle (11) adapted to rotatably accommodate said toothed head (7).

3. Joint according to claim 2, wherein said screw stem (12) extends to protrude outside the accommodation case (2) through a front aperture (14) provided in the accommodation case (2) in correspondence to and in communication with the first annular receptacle (11).

4. Joint according to claim 1, wherein said accommodation case (2) defines a second annular receptacle (16) adapted to rotatably accommodate said actuator member (6).

5. Joint according to any of the preceding claims, wherein said accommodation case (2) comprises a through-hole (17) provided in correspondence to the second annular receptacle (16), through which a tool is able to be inserted to engage a correspondingly shaped centre portion (18) of the actuator member (6).

6. Joint according to any of the preceding claims, wherein said actuator member (6) is provided in the form of a crown gear (8) adapted to rotate within the annular receptacle (16).

7. Joint according to claim 6, wherein said crown gear (8) and said toothed head (7) are arranged orthogonally in relation to each other.

8. Joint according to claim 7, wherein said centre portion (18) is formed of an aperture provided centrally on said crown gear (8).

9. Joint according to any of the preceding claims, wherein said accommodation case (2) comprises a central cavity (19), in communication with said centre portion (18) and said through-hole (17), extending throughout the accommodation case (2) in a direction that is perpendicular to the plane in which the crown gear (8) is adapted to rotate.

10. Joint according to any of the preceding claims, wherein said central cavity (19) is adapted to extend into the receptacle of the first structural member (3), in which the accommodation case (2) is adapted to be inserted, so as to enable a tool to gain access to the centre portion (18) of the crown gear (8) by passing through the whole thickness of the first structural member (3).

11. Joint according to any of the preceding claims 1 to 5, wherein said actuator member (6) is provided in the form of a shaft (23), whose teeth (22) protrude radially relative to an axis of rotation (24) of the same shaft.

12. Joint according to claim 11, wherein at a first end portion (25) thereof, said shaft (23) comprises an annular edge (26) adapted to slide along the annular receptacle (16) to guide the rotation of the shaft (23) about said axis of rotation (24) thereof.

13. Joint according to claim 12, wherein the axis of rotation (24) of the shaft (23) and the axis of rotation (27) of the toothed head (7) form an angle different from 90° relative to each other, said axis of rotation (24) of the shaft (23) being inclined so as to converge towards the toothed head (7).

14. Joint according to claim 13, wherein said accommodation case (2) defines a guide member (28) adapted to hold and keep the shaft (23) in its inclined position towards the toothed head (7), so that the teeth (22) of the shaft (23) are continuously biased into coupling with the toothed head (7).

15. Joint according to any of the preceding claims, wherein said accommodation case (2) is comprised of a first half-shell (20) and a second half-shell (21), which are associable to each other so as to contain said toothed head (7) and said crown gear (8).
